(19) **Europäisches Patentamt**
**European Patent Office**
**Office européen des brevets**

(11) **EP 4 234 649 B1**

(12) **EUROPEAN PATENT SPECIFICATION**

(45) Date of publication and mention
of the grant of the patent:
**05.08.2026 Bulletin 2026/32**

(21) Application number: **23159024.1**

(22) Date of filing: **28.02.2023**

(51) International Patent Classification (IPC):
***C09D 11/38*** *(2014.01)*     ***C09D 11/322*** *(2014.01)*

(52) Cooperative Patent Classification (CPC):
**C09D 11/322; C09D 11/38**

(54) **WATER-BASED INK FOR INKJET RECORDING, INKJET RECORDING METHOD, INKJET RECORDING DEVICE, INK STORAGE CONTAINER, AND PRINTED RECORDING MEDIUM**

TINTE AUF WASSERBASIS FÜR TINTENSTRAHLAUFZEICHNUNG, TINTENSTRAHLAUFZEICHNUNGSVERFAHREN, TINTENSTRAHLAUFZEICHNUNGSVORRICHTUNG, TINTENBEHÄLTER UND GEDRUCKTES AUFZEICHNUNGSMEDIUM

ENCRE À BASE D'EAU POUR IMPRESSION À JET D'ENCRE, PROCÉDÉ D'IMPRESSION À JET D'ENCRE, DISPOSITIF D'IMPRESSION À JET D'ENCRE, RÉCIPIENT DE STOCKAGE D'ENCRE ET SUPPORT D'IMPRESSION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.02.2022 JP 2022029623**

(43) Date of publication of application:
**30.08.2023 Bulletin 2023/35**

(73) Proprietor: **BROTHER KOGYO KABUSHIKI KAISHA**
**Nagoya-shi, Aichi 467-8561 (JP)**

(72) Inventors:
• **TAHARA, Tomoyo**
**Nagoya-shi, 467-8562 (JP)**
• **YAMASHITA, Narumi**
**Nagoya-shi, 467-8562 (JP)**

(74) Representative: **Prüfer & Partner mbB**
**Patentanwälte · Rechtsanwälte**
**Sohnckestraße 12**
**81479 München (DE)**

(56) References cited:
**EP-A1- 3 546 643**     **JP-A- 2003 128 965**
**KR-A- 20170 011 076**     **KR-A- 20190 054 855**

**Description**

TECHNICAL FIELD

The present invention relates to a water-based ink for inkjet recording, an inkjet recording method, an inkjet recording device, an ink storage container, and a printed recording medium.

BACKGROUND ART

Patent document 1 discloses a method of improving the storage stability of water-based inks by blending triethanolamine (TEA) as a pH adjuster. Patent document 2 discloses an ink composition for digital textile printing comprising a pigment, a dye, a surfactant, a defoaming agent, an emulsifier, a moisturizer, an increasing agent, a perfume ingredient, a stabilizer, an antiseptic agent, an acidity regulator and a solvent. The ink composition for digital textile printing does not contain harmful chemicals, prevent the blurring of the ink without pre-and post-printing process, and is easy to print on various textile materials. Additionally, JP2003128965 might be mentioned as background art.

CITATION LIST

PATENT DOCUMENTS

Patent Document 1: Japanese Unexamined Patent Application No. 2003-128965
Patent Document 2: KR 2019/0054855 A

SUMMARY OF THE INVENTION

PROBLEM TO BE SOLVED BY THE INVENTION

However, there is demand for increase storage stability, even while reducing the formulation amount of TEA (including not adding TEA), from the standpoint of versatility of the water-based ink composition.

Therefore, an object of the present invention is to provide a water-based ink for inkjet recording that can both reduce the formulation amount of TEA and improve storage stability.

MEANS FOR SOLVING THE PROBLEM

In order to achieve the aforementioned object, the water-based ink for inkjet recording of the present invention contains pigment, an alkali metal hydrogencarbonate, and water; and the pigment and the alkali metal hydrogencarbonate satisfy the following condition (1).

$$\text{Condition (1)}: 7.5 \leq A/B$$

A: Formulation amount of pigment solids of the pigment in the total amount of water-based ink for inkjet recording (solid amount of the pigment by mass in the water-based ink relative to a total mass of the water-based ink)
B: Formulation amount of alkali metal hydrogencarbonate in the total amount of water-based ink for inkjet recording (amount of the alkali metal hydrogencarbonate by mass in the water-based ink relative to the total mass of the water-based ink)

EFFECT OF THE INVENTION

The water-based ink for inkjet recording of the present invention can enhance storage stability even if TEA is not added or if the formulation amount of TEA is reduced, by containing pigment and an alkali metal hydrogencarbonate at a prescribed ratio.

BRIEF DESCRIPTION OF THE DRAWINGS

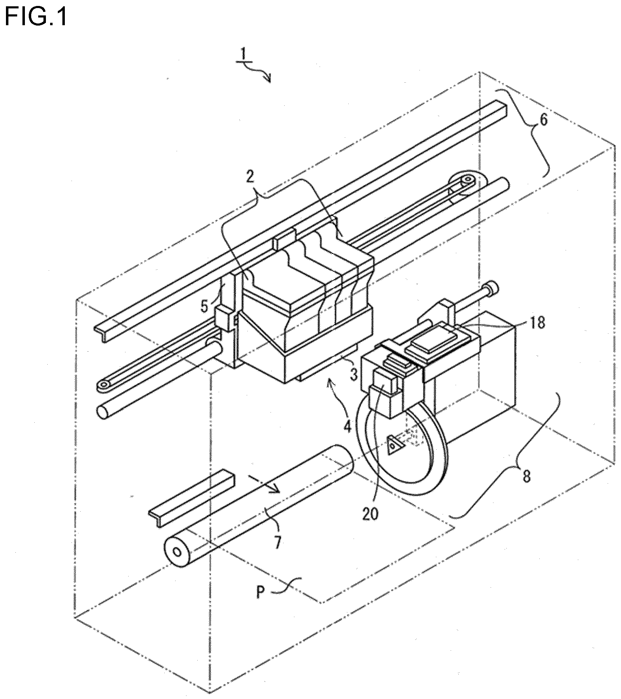

FIG. 1 is a schematic perspective view of an example of an inkjet recording device.

## DESCRIPTION OF THE EMBODIMENTS

In the present invention, the term "mass" may be interpreted as "weight" unless otherwise specified. For example, "mass ratio" may be interpreted as "weight ratio" unless otherwise specified, and "mass%" may be interpreted as "weight%" unless otherwise specified.

The water-based ink for inkjet recording of the present invention (hereinafter referred to as "water-based ink" or "ink") is described below. The water-based ink contains pigments, an alkali metal hydrogencarbonate, and water.

The pigment is not particularly limited, and includes, for example, carbon black, inorganic pigments, organic pigments, and the like. Examples of the carbon black include furnace black, lamp black, acetylene black, channel black, and the like. Examples of inorganic pigments include titanium dioxide, iron oxide inorganic pigments, carbon black inorganic pigments, and the like. Examples of the organic pigments include azo pigments such as azo lakes, insoluble azo pigments, condensed azo pigments, chelated azo pigments; polycyclic pigments such as phthalocyanine pigments, perylene and perinone pigments, anthraquinone pigments, quinacridone pigments, dioxazine pigments, thioindigo pigments, isoindolinone pigments, quinophthalone pigments, and the like; dye lake pigments such as basic dye-type lake pigments and acid dye-type lake pigments; nitro pigments; nitroso pigments; aniline black daylight fluorescent pigments; and the like. Other pigments can also be used if they can be dispersed in a water-based phase. Specific examples of these pigments include C.I. Pigment Black 1, 6 and 7; C.I. Pigment Yellow 1, 2, 3, 12, 13, 14, 15, 16, 17, 55, 74, 78, 150, 151, 154, 180, 185 and 194; C.I. Pigment Orange 31 and 43; C.I. Pigment Red 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224 and 238; C.I. Pigment Violet 19 and 196; C.I. Pigment Blue 1, 2, 3, 15, 15:1, 15:2, 15:3, 15:4, 16, 22 and 60; C.I. Pigment Green 7 and 36; and solid solutions of these pigments, and the like.

The pigment may be a pigment that is dispersed in a solvent by using a resin dispersing agent (also referred to as resin-dispersed pigment). For example, standard polymer dispersing agents and the like (also referred to as resins for pigment dispersion, resin dispersing agents, and the like) may be used as the resin dispersing agent, or they may be prepared in-house. The pigments in the water-based ink of the present invention may be encapsulated by polymers. For example, a resin dispersing agent containing at least one of methacrylic acid or acrylic acid as a monomer can be used, including commercially available products for example. The resin dispersing agent may be, for example, block copolymers, graft copolymers, or random copolymers containing two or more monomers selected from the group consisting of hydrophobic monomers such as styrene, styrene derivatives, vinylnaphthalene, vinylnaphthalene derivatives, aliphatic alcohol esters of $\alpha,\beta$-ethylenically unsaturated carboxylic acid; acrylic acid; acrylic acid derivatives; maleic acid; maleic acid derivatives; itaconic acid; itaconic acid derivatives; fumaric acid; fumaric acid derivatives; and salts thereof. Commercial products include, for example, "Joncryl (registered trademark) 611", "Joncryl (registered trademark) 60", "Joncryl (registered trademark) 586", "Joncryl (registered trademark) 687", "Joncryl (registered trademark) 63", and "Joncryl (registered trademark) HPD296" manufactured by Johnson Polymer Co.; "Disperbyk190" and "Disperbyk191" manufactured by BYK Chemie; "Solsperse 20000" and "Solsperse 27000", and the like, manufactured by AstraZeneca Corporation; and the like.

The method of dispersing the pigments using the resin for pigment dispersion is, for example, to disperse the pigments using a dispersing device. The dispersing device used for dispersion of the pigments is not limited so long as they are general dispersion machines, such as ball mills, roll mills, sand mills (e.g., high-speed type), and the like.

The pigment may be a self-dispersing pigment. The self-dispersing pigments include those that can be dispersed in water without the use of a dispersing agent, for example, by introducing at least one hydrophilic functional group such as a carbonyl group, hydroxyl group, carboxylic group, sulfo group, phosphate group, or the like, or salts thereof, directly or via other groups into the pigment particles by chemical bonds. The self-dispersing pigments can be those where a pigment is treated by the methods described in Japanese Unexamined Patent Application No. H8-3498, Japanese PCT Unexamined Patent Application No. 2000-513396, Japanese PCT Unexamined Patent Application No. 2008-524400, Japanese PCT Unexamined Patent Application No. 2009-515007, Japanese PCT Unexamined Patent Application No. 2011-515535, and the like. Both inorganic pigments and organic pigments can be used as raw materials for the self-dispersing pigments. Pigments suitable for the above treatment include, for example, carbon blacks such as MA8 and MA100, manufactured by Mitsubishi Chemical Corporation, and the like. The self-dispersing pigments described above may be commercially available, for example. The above commercial products include, for example, CAB-O-JET (registered trademark) 200, CAB-O-JET (registered trademark) 250C, CAB-O-JET (registered trademark) 260M, CAB-O-JET (registered trademark) 270Y, CAB-O-JET (registered trademark) 300, CAB-O-JET (registered trademark) 400, CAB-O-JET (registered trademark) 450C, CAB-O-JET (registered trademark) 465M, CAB-O-JET (registered trademark) 470Y, manufactured by Cabot Corporation; BONJET (registered trademark) BLACK CW-2 and BONJET (registered trademark) BLACK CW-3, manufactured by Orient Chemical Industries Co., LIOJET (registered trademark) WD BLACK 002C, manufactured by Toyo Ink Manufacturing, and the like.

The formulation amount of pigment solids (A) in the total amount of water-based ink is not particularly limited, and can be appropriately determined according to the desired optical density or color saturation, and the like, for example. The formulation amount of the pigment solid (A) portion may be 0.1 mass% to 20 mass%, preferably 1 mass% to 10 mass%, and more preferably 2 mass% to 8 mass%. If the pigment is dispersed in solvent by using a resin disbursing agent, the formulation amount of pigment solids (A) is only the mass of pigment, and the mass of the resin disbursing agent is not included. One type of pigment and resin dispersing agent may be used alone, or a combination of two or more types may be used.

The water-based ink may contain dyes, or the like.

The alkali metal hydrogencarbonate is an alkali metal salt containing a hydrogencarbonate ion, for example, such as at least one of sodium hydrogencarbonate and potassium hydrogencarbonate. The alkali metal hydrogencarbonate is used as a pH adjusting agent.

The formulation amount of alkali metal hydrogencarbonate (B) in the total amount of water-based ink is not particularly limited, and can be appropriately determined according to the desired optical density or color saturation, and the like, for example. The formulation amount (B) may be, for example, 0.05 mass% to 0.8 mass%, preferably 0.1 mass% to 0.8 mass%, and more preferably 0.2 mass% to 0.8 mass%. One type of the alkali metal hydrogencarbonate may be used alone, or two or more types used in combination.

The formulation amount of pigment solids of the pigment in the total amount of water-based ink (A) and the amount of alkali metal hydrogencarbonate in the total amount of water-based ink (B) satisfy the following condition (1).

$$\text{Condition (1): } 7.5 \leq A/B$$

For the above condition (1), the upper limit of A/B may not be particularly limited, and can be appropriate determined by a person of ordinary skill in the art, for example. The upper limit of A/B is, for example, less than 60, or 120 or less, or 300 or less, or the like. The formulation amount of pigment solids of the pigment in the total amount of the water-based ink (A) and the formulation amount of the alkali metal hydrogencarbonate in the total amount of the water-based ink (B) may, for example, satisfy either one of condition (1-1) or condition (1-2).

$$\text{Condition (1-1): } 7.5 \leq A/B \leq 120$$

$$\text{Condition (1-2): } 7.5 \leq A/B < 60$$

The water may be ion exchanged water, pure water, or the like. The amount of water to be blended in the total amount of water-based ink (water ratio) is determined in accordance with desired ink characteristics and the like. The water ratio may, for example, be the remainder after the other ingredients. The formulation amount of water may be, for example, 50 mass% to 95 mass%, preferably 55 mass% to 90 mass%, and more preferably 60 mass% to 80 mass%.

The pH (initial pH) of the water-based ink is, for example, less than 9.2. The pH of the water-based ink when stored at 60°C for one week (pH after storage) is, for example, 7.8 or higher. In other words, the change in pH (pH change) when the water-based ink is stored at 60°C for one week is, for example, 10% or less. The change in pH may be less than 5%, for example. On the other hand, if the initial pH of the water-based ink is 9.2 or higher, for example, the adhesive in the channel through which the water-based ink passes will deteriorate. Furthermore, a pH after storage of the water-based ink that is less than 7.8, for example, may cause metal corrosion. Therefore, if the change in pH exceeds 10%, there will be problems with adhesion degradation, metal corrosion, and the like. Note that the change in pH can be determined from the following equation (1).

$$\text{Change in pH} = (\text{pH after storage - initial pH})/\text{initial pH} \quad \text{(Equation 1)}$$

By formulating the water-based ink so that the pigment and the alkali metal hydrogencarbonate satisfy condition (1), the storage stability can be improved without using TEA or with a reduced formulation amount of TEA. The mechanism for improving the storage stability is hypothesized to be as follows. The reaction between the alkali metal hydrogencarbonate and the water in an aqueous solution increases OH$^-$ in the aqueous solution, making the aqueous solution alkaline. Furthermore, the alkali metal hydrogencarbonate dissolves in water to form hydrogencarbonate ions ($HCO_3^-$). Furthermore, the hydrogencarbonate ions ($HCO_3^-$) will react with water to produce carbonic acid ($H_2CO_3$) and hydroxide ions ($OH^-$). The alkali metal hydrogencarbonate is a solid, and does not volatilize but remains in the water-based ink when the water in the water-based ink evaporates, thereby retaining moisture. In other words, adding the alkali metal hydrogencarbonate to the water-based ink provides an anti-caking effect (moisture retention effect), may inhibit drying of water-based ink, and improves storage stability. However, this is only a hypothesis for the mechanism, and the present invention is not limited thereto.

The water-based ink may, for example, further contain a surfactant.

The surfactant is not limited and may be appropriately selected in accordance with the purpose, and for example, commercially available products may be used. Specifically, the surfactant may be an acetylene surfactant, or the like, for example.

Commercial acetylene surfactants include: OLFINE (registered trademark) E1004, OLFINE (registered trademark) E1008, and OLFINE (registered trademark) E1010 manufactured by Nissin Chemical Industry; SURFINOL (registered trademark) 440, SURFINOL (registered trademark) 465, and SURFINOL (registered trademark) 485 manufactured by Air Products and Chemicals, Inc.; ACETYLENOL (registered trademark) E40 and ACETYLENOL (registered trademark) E100 manufactured by Kawaken Fine Chemicals Co., and the like.

In addition to or in place of the acetylene surfactant, the water-based ink may contain other surfactants. Examples of other surfactants include nonionic surfactants manufactured by Kao Corporation including the EMULGEN (registered trademark) series, RHEODOL (registered trademark) series, EMASOL (registered trademark) series, EXCEL (registered trademark) series, EMANON (registered trademark) series, AMIET (registered trademark) series, and AMINON (registered trademark) series and the like; nonionic surfactants manufactured by Toho Chemical Industry Co. such as Solvon (registered trademark) series and the like; nonionic surfactants manufactured by Lion Corporation such as DOBANOX (registered trademark) series, LEOCOL (registered trademark) series, LEOX (registered trademark) series, LAOL, LEOCOL (registered trademark) series, LIONOL (registered trademark) series, CADENAX (registered trademark) series, LIONON (registered trademark) series, LEOFAT (registered trademark) series, and the like; anionic surfactants manufactured by Kao Corporation such as the EMAL (registered trademark) series, LATEMUL (registered trademark) series, VENOL (registered trademark) series, NEOPELEX (registered trademark) series, NS SOAP, KS SOAP, OS SOAP, and PELEX (registered trademark) series, and the like; anionic surfactants manufactured by Lion Corporation such as the LIPOLAN (registered trademark) series, LIPON (registered trademark) series, SUNNOL (registered trademark) series, LIPOTAC (registered trademark) TE, ENAGICOL series, LIPAL (registered trademark) series and LOTAT (registered trademark) series, and the like; and cationic surfactants manufactured by DKS Co. such as CATIOGEN (registered trademark) ES-OW and CATIOGEN (registered trademark) ES-L, and the like.

One type of surfactant may be used alone, or a combination of two or more types may be used.

The formulation amount of surfactant in the total amount of water-based ink can be appropriately selected in accordance with the purpose. The formulation amount of the surfactant may be 0.01 to 5 mass%, preferably 0.05 to 5 mass%, and more preferably 0.05 mass% to 3 mass%.

The water-based ink may, for example, further contain a penetrating agent.

The penetrating agent is, for example, at least one of an alkylene diol or a glycol ether compound. Note that the alkylene diols include diols that contain an alkylene diol as a portion of the structure, and the glycol ether compounds contain glycol ether as a portion of the structure. Examples of the alkylene diols include 1,2-hexanediol, 1,2-heptanediol, 1,3-propanediol, 1,2-butanediol, 1,3-butanediol, 1,4-butanediol, 2,3-butanediol, 3-methyl-1,3-butanediol, 1,2-pentanediol, 1,4-butanediol, 1,5-pentanediol, 1,6-hexanediol, 2-methyl-2,4-pentanediol, and 3-methyl-1,5-pentanediol, and the like. Examples of the glycol ether compounds include ethylene glycol methyl ether, ethylene glycol ethyl ether, ethylene glycol-n-propyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n propyl ether, tripropylene glycol ethyl ether, tripropylene glycol-n-propyl ether, tripropylene glycol-n-butyl ether, and the like.

The water-based ink may contain other penetrating agents in addition to or in place of the at least one alkylene diol or glycol ether compound.

One type of penetrating agent may be used alone or a combination of two or more types may be used.

The formulation amount of the penetrating agent to the total amount of water-based ink is, for example, 1 weight% to 20 weight%, preferably 1 weight% to 15 weight%, and more preferably 1 weight% to 10 weight%.

The water-based ink may, for example, further contain a wetting agent.

The wetting agent is not particularly limited, but examples include lower alcohols such as methyl alcohol, ethyl alcohol, n-propyl alcohol, isopropyl alcohol, n-butyl alcohol, sec-butyl alcohol and tert-butyl alcohol, and the like; amides such as dimethylformamide, dimethylacetamide, and the like; ketones such as acetone and the like; keto alcohols such as diacetone alcohols and the like; ethers such as tetrahydrofuran, dioxane, and the like; polyethers such as polyalkylene glycol; alkylene glycol; polyhydric alcohols such as glycerin, trimethylolpropane, trimethylolethane and the like; 2-pyrrolidone; N-methyl-2-pyrrolidone; 1,3-dimethyl-2-imidazolidinone; and the like. Examples of the polyalkylene glycol include polyethylene glycol, polypropylene glycol, and the like. Examples of the alkylene glycol include ethylene glycol, propylene glycol, butylene glycol, diethylene glycol, triethylene glycol, dipropylene glycol, tripropylene glycol, thiodiglycol, hexylene glycol, and the like. These wetting agents may be used alone, or in a combination of two or more types. Of these, alkylene glycol, polyhydric alcohols such as glycerin, and the like are preferable.

The amount of the wetting agent in the total amount of the water-based ink may be, for example, 0 mass% to 95 mass%, preferably 5 mass% to 80 mass%, and more preferably 5 mass% to 50 mass%.

The water-based ink may also contain conventionally known additives as needed. The additives include, for example, pH adjusting agents, viscosity adjusting agents, surface tension adjusting agents, anti-mold agents, and the like. Examples of the viscosity adjusting agent include polyvinyl alcohol, cellulose, water-soluble resins, and the like.

The water-based ink may, for example, further contain triethanolamine (TEA) as a pH adjusting agent, or may not substantially contain triethanolamine. From the standpoint of ease of preparation of the water-based ink, it is preferable that the water-based ink be substantially free of triethanolamine. If triethanolamine is included in the water-based ink, the amount should be a sufficiently small amount relative to the formulation amount of the pH adjusting agent (alkali metal hydrogencarbonate) in the total amount of the water-based ink. Specifically, for example, the formulation amount of triethanolamine to the total amount of water-based ink may be 0.1 mass% or less. In addition, the formulation amount of triethanolamine in the total amount of the water-based ink may, for example, be 1/2 or less, 1/5 or less, or 1/10 or less, than the formulation amount (B) of alkali metal hydrogencarbonate in the total amount of the water-based ink. In general, fewer substances in the water-based ink makes preparation of the water-based ink easier. The water-based ink for inkjet recording does not contain TEA or the formulation amount of TEA can be reduced, and therefore the ease of preparation of the water-based ink can be improved. Furthermore, the water-based ink for inkjet recording of the present invention can reduce the amount of TEA to be produced.

Next, the ink storage container of the present invention is an ink container that contains water-based ink for inkjet recording, and the water-based ink is the water-based ink for inkjet recording according to the present invention. The ink storage container may be a conventionally known container, for example. Examples of ink storage containers include ink cartridges, tanks, pouches, and the like.

Next, the inkjet recording device and inkjet recording method of the present invention will be described.

The inkjet recording device of the present invention is an inkjet recording device that includes an ink storing part and ink ejecting part, and the ink contained in the ink storing part is ejected by the ink ejecting part. The water-based ink for inkjet recording of the present invention is stored in the ink storing part.

FIG. 1 illustrates an example configuration of an inkjet recording device of the present invention. As illustrated in the drawing, an inkjet recording device 1 includes four ink storing parts (ink cartridge 2), an ink ejecting part (inkjet head) 3, a head unit 4, a carriage 5, a drive unit 6, a platen roller 7, and a purging device 8 as major components.

The four ink cartridges 2 contain four colors of water-based ink, one each of yellow, magenta, cyan and black. For example, at least one of the four water-based inks is the water-based ink of the present invention. This example shows a set of four ink cartridges 2, but instead, an integrated ink cartridge may be used, having the interior partitioned to form a water-based yellow ink compartment, a water-based magenta ink compartment, a water-based cyan ink compartment, and a water-based black ink compartment. The main body of the ink cartridge may be a conventionally known cartridge main body, for example.

The inkjet head 3 installed in the head unit 4 records on a recording medium (for example, recording paper) P. The four ink cartridges 2 and the head unit 4 are mounted on the carriage 5. The drive unit 6 moves the carriage 5 back and forth in a straight line direction. The drive unit 6 may be any conventionally known drive unit, for example (see, for example, Japanese Unexamined Patent Application No. 2008-246821). The platen roller 7 extends in a reciprocating direction of carriage 5 and is disposed opposite the inkjet head 3.

The inkjet head 3, for example, includes a plurality of layers of thin metal plates. Through holes are formed in each of the thin plates. A plurality of layers of thin plates with through holes form a channel for the water-based ink to pass through. The thin plates, for example, are bonded by an adhesive. Note that some adhesive may deteriorate when the pH of the water-based ink is 9.2 or higher. Some of the metals that form the thin plates can corrode if the pH of the water-based ink is less than 7.8. Therefore, considering the adhesive and thin plates that form the inkjet head 3, the pH of the water-based ink should be, for example, an initial pH of less than 9.2, and the pH of the water-based ink when stored at 60°C for one week (pH after storage) should be, for example, 7.8 or higher.

The purging device 8 suctions out defective ink containing air bubbles and the like that accumulate inside the inkjet head 3. For example, a conventionally known purging device can be used as the purging device 8 (see, for example, Japanese Unexamined Patent Application No. 2008-246821).

A wiper member 20 is provided on the platen roller 7 side of the purging device 8, adjacent to the purging device 8. The wiper member 20 is formed in the shape of a spatula, and wipes a nozzle forming surface of the inkjet head 3 as the carriage 5 moves. In FIG. 1, a cap 18 covers a plurality of nozzles of the inkjet head 3 when the head has returned to the reset position after recording is finished, in order to prevent the water-based ink from drying out.

In the inkjet recording device 1 of the present example, the four ink cartridges 2 are mounted on one carriage 5 together with the head unit 4. However, the present invention is not limited thereto. In the inkjet recording device 1, each of the four ink cartridges 2 may be mounted on a carriage separate from the head unit 4. Each of the four ink cartridges 2 may be arranged and secured in the inkjet recording device 1, rather than being mounted on the carriage 5. In these embodiments, for example, each of the four ink cartridges 2 and the head unit 4 mounted on the carriage 5 are connected by tubing or the like, and the water-based ink is supplied from each of the four ink cartridges 2 to the head unit 4. Furthermore, in these embodiments, four ink bottles in bottle form may be used instead of the four ink cartridges 2. In this case, the ink bottle preferably has an injection port for injecting ink from the outside into the inside.

Inkjet recording using this inkjet recording device 1 is performed, for example, as follows. First, the recording paper P is fed from a paper feeding cassette (not illustrated) provided on the side or below the inkjet recording device 1. The recording paper P is introduced between the inkjet head 3 and the platen roller 7. Prescribed recording is performed on the introduced recording paper P by the water-based ink ejected from the inkjet head 3. After recording, the recording paper P is ejected from the inkjet recording device 1. In FIG. 1, paper feeding and paper ejecting mechanisms for the recording paper P are omitted.

The device illustrated in FIG. 1 uses a serial inkjet head, but the present invention is not limited thereto. The inkjet recording device may be a line inkjet head or a roller-to-roller device.

Next, the inkjet recording method of the present invention is an inkjet recording method that includes a recording step in which water-based ink is ejected onto the recording medium by an inkjet method, and in the recording step, the water-based ink for inkjet recording of the present invention is used as the water-based ink. The inkjet recording method of the present invention can be performed, for example, using the inkjet recording device of the present invention. The recording includes printing, text printing, image printing, and the like.

EXAMPLES

Next, Examples of the present invention will be described along with Comparative Examples. Note that the present invention is not limited or restricted by the following Examples and Comparative Examples.

(Preparation of pigment dispersion A)

Pure water was added to a mixture of 20 mass% of pigment (carbon black) and 7 mass% of sodium hydroxide neutralized product of styrene-acrylic acid copolymer (acid value of 175 mg KOH/g, molecular weight of 10,000) to achieve a total of 100 mass%, and then the mixture was stirred to obtain a mixture. The mixture was placed in a wet sand mill filled with 0.3 mm diameter zirconia beads and dispersed for 6 hours. Afterwards, the zirconia beads were removed by a separator and filtered through a 3.0 $\mu$m pore diameter cellulose acetate filter to obtain pigment dispersion A. The styrene-acrylic acid copolymer is a water-soluble polymer that is generally used as a pigment dispersing agent. Note that in pigment dispersion A, the formulation amount of pigment solids (A) was 15 mass% of the total amount of pigment dispersion A.

(Preparation of pigment dispersion B)

Pure water was added to a mixture of 20 mass% of pigment (C.I. Pigment yellow 74) and 7 mass% of sodium hydroxide neutralized product of styrene-acrylic acid copolymer (acid value of 175 mg KOH/g, molecular weight of 10,000) to achieve a total of 100 mass%, and then the mixture was stirred to obtain a mixture. The mixture was placed in a wet sand mill filled with 0.3 mm diameter zirconia beads and dispersed for 6 hours. Afterwards, the zirconia beads were removed by a separator and filtered through a 3.0 $\mu$m pore diameter cellulose acetate filter to obtain pigment dispersion B. In pigment dispersion B, the formulation amount of pigment solids (A) was 15 mass% of the total amount of pigment dispersion B. Note that the sodium hydroxide neutralized product of the styrene-acrylic acid copolymer is a water-soluble polymer that is generally used as a pigment dispersing agent.

(Examples 1 to 18, Comparative Examples 1 to 10, and Reference Example 1)

The components of the water-based ink composition (Tables 1 to 3), excluding the pigment dispersions A and B, were uniformly mixed to obtain an ink solvent. Next, the ink solvent was added to the pigment dispersions A and B, and mixed until uniform. The resulting mixture was then filtered through a cellulose acetate-type membrane filter (pore diameter 3.00 $\mu$m) manufactured by Toyo Roshi Kaisha to obtain water-based ink for inkjet recording of Examples 1 to 18, Comparative Examples 1 to 10, and Reference Example 1, as shown in Tables 1 to 3.

The water-based inks of Examples 1 to 18, Comparative Examples 1 to 10, and Reference Example 1 were subjected to (a) change in pH evaluation and (b) agglomeration evaluation, using the following methods.

(a) Change in pH evaluation

Each of the water-based inks in the Examples, Comparative Examples, and Reference Example was subjected to a storage test at 60°C for one week in a thermostatic chamber manufactured by ESPEC Corp., and the pH was measured before and after the storage test. The pH was measured using a tabletop pH meter "F-54" manufactured by HORIBA, Ltd. Next, the change in pH was determined from the pH before and after the storage test using equation (1), and evaluated based on the following evaluation criteria.

Change in pH evaluation criteria

A: Initial pH is less than 9.2, the pH after storage is 7.8 or higher, and the change in pH is less than 5%.
B: Initial pH is less than 9.2, the pH after storage is 7.8 or higher, and the change in pH is 5% or higher and 10% or lower.
C: Initial pH 9.2 or higher or the pH after storage is less than 7.8.
D: Initial pH and the pH after storage is not measurable

(b) Agglomeration Evaluation

Similar to the (a) change in pH evaluation, the average particle size of the pigment was measured for each of the water-based inks in the Examples, Comparative Examples, and Reference Example before and after the storage test. The average particle size was measured using a "NICOMP 380ZLS-S" particle sizing instrument (manufactured by Particle Sizing Systems; PSS) at 25°C. The evaluation was then performed according to the following evaluation criteria. Note that if agglomeration occurs, the dispersed pigment particles will gather, and the average particle size of the pigment will increase, and thus it can be determined that the storage stability will be inferior. Therefore, if the results of the agglomeration evaluation are favorable, the water-based ink can be evaluated as having excellent storage stability.

Agglomeration evaluation criteria

A: No change in the average particle size of the pigment before and after storage testing
C: Change in the average particle size of the pigment before and after storage testing

The water-based ink compositions and evaluation results of the water-based inks of Examples 1 to 18, Comparative Examples 1 to 10, and Reference Example 1 are shown in Tables 1 to 3. Table 3 also shows the water-based ink compositions and evaluation results of Example 1 shown in Table 1.

[Table 1]

EP 4 234 649 B1

| Water-based ink composition (mass%) | | | Example | | | | | | | | | | | | | | | | | | |
|---|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 17 | 18 |
| Colorant (A) | | Pigment dispersion A (*1) | 6.0 | 6.0 | 6.0 | 6.0 | 6.0 | 6.0 | 6.0 | 6.0 | 6.0 | 6.0 | 6.0 | 6.0 | 6.0 | 6.0 | - | - | - | - |
| | | Pigment dispersion B (*2) | - | - | - | - | - | - | - | - | - | - | - | - | - | - | 6.0 | 6.0 | 6.0 | 6.0 |
| pH adjusting agent | | Sodium hydrogencarbonate (B) | 0.2 | 0.05 | 0.1 | 0.3 | 0.5 | 0.7 | 0.8 | - | - | 0.2 | 0.2 | 0.2 | 0.2 | 0.2 | 0.2 | 0.7 | 0.2 | 0.2 |
| | | Potassium hydrogencarbonate (B) | - | - | - | - | - | - | - | 0.2 | 0.5 | - | - | - | - | - | - | - | - | - |
| | | Triethanolamine | - | - | - | - | - | - | - | - | - | - | - | - | 0.1 | 0.02 | - | - | 0.1 | 0.02 |
| Wetting agent | Glycerin | | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 |
| Penetrating agent | | Triethylene glycol-n-butyl ether | 1.0 | 1.0 | 1.0 | 1.0 | 1.0 | 1.0 | 1.0 | 1.0 | 1.0 | 1.0 | 1.0 | - | 1.0 | 1.0 | 1.0 | 1.0 | 1.0 | 1.0 |
| | | 1.2-hexanediol | - | - | - | - | - | - | - | - | - | - | - | 0.5 | - | - | - | - | - | - |
| | | 3-methyl-1,5-pentanediol | - | - | - | - | - | - | - | - | - | - | - | 3.0 | - | - | - | - | - | - |
| Surfactant | | OLFINE(R) E1010 (*3) | 0.2 | 0.2 | 0.2 | 0.2 | 0.2 | 0.2 | 0.2 | 0.2 | 0.2 | 0.1 | - | 0.2 | 0.2 | 0.2 | 0.2 | 0.2 | 0.2 | 0.2 |
| | | OLFINE(R) E1004 (*4) | - | - | - | - | - | - | - | - | - | - | 0.2 | - | - | - | - | - | - | - |
| Water | | | Remainder | Remainder | Remainder | Remainder | Remainder | Remainder | Remainder | Remainder | Remainder | Remainder | Remainder | Remainder | Remainder | Remainder | Remainder | Remainder | Remainder | Remainder |
| A/B | | | 30.0 | 120.0 | 60.0 | 20.0 | 12.0 | 8.6 | 7.5 | 30.0 | 12.0 | 30.0 | 30.0 | 30.0 | 30.0 | 30.0 | 30.0 | 8.6 | 30.0 | 30.0 |
| Initial pH (pH value before storage test) | | | 8.3 | 8.2 | 8.2 | 8.3 | 8.4 | 8.5 | 8.5 | 8.3 | 8.4 | 8.7 | 8.8 | 8.6 | 8.0 | 7.9 | 8.3 | 9.0 | 8.2 | 7.9 |
| pH after storage (pH value after storage test) | | | 8.1 | 7.8 | 7.8 | 8.0 | 8.2 | 8.4 | 8.4 | 7.9 | 8.2 | 8.0 | 8.0 | 8.3 | 7.8 | 7.8 | 8.3 | 9.0 | 8.2 | 7.8 |
| Change in pH (%) | | | A -2.8 | B -5.1 | B -5.0 | A -3.4 | A -2.6 | A -0.9 | A -1.2 | A -4.9 | A -2.5 | B -8.2 | B -8.5 | A -3.5 | A -2.5 | A -2.2 | A -0.2 | A -0.4 | A -0.1 | A -1.2 |
| Agglomeration Evaluation | | | A | A | A | A | A | A | A | A | A | A | A | A | A | A | A | A | A | A |

*1: Water dispersion of carbon black (containing resin dispersing agent); Values in the table indicate the formulation amount of the pigment solid portion.

*2: Aqueous dispersion of C.I. Pigment Yellow 74 (containing resin dispersing agent); Values in the table indicate the formulation amount of the pigment solid portion.

*3: Acetylene glycol surfactant: Nissin Chemical Co. Ltd.; Values in the table indicate the formulation amount.

*4: Acetylene glycol surfactant: Nissin Chemical Co. Ltd.; Values in the table indicate the formulation amount.

[Table 2]

| | | | Comparative Example | | | | | | | | | |
|---|---|---|---|---|---|---|---|---|---|---|---|---|
| | | | 1 | 2 | 3 | 4 | 5 | 6 | 7 | 8 | 9 | 10 |
| Water-based ink composition (mass%) | Colorant (A) | Pigment dispersion A (*1) | 6.0 | 6.0 | 6.0 | 6.0 | 6.0 | 6.0 | 6.0 | - | 6.0 | 6.0 |
| | | Pigment dispersion B (*2) | - | - | - | - | - | - | - | 6.0 | - | - |
| | pH adjusting agent | Sodium hydrogencarbonate (B) | - | - | - | - | - | - | - | - | 1.0 | - |
| | | Potassium hydrogencarbonate (B) | - | - | - | - | - | - | - | - | - | 1.0 |
| | | Triethanolamine | - | - | - | - | - | - | - | 0.2 | - | - |
| | | Ammonium hydrogencarbonate | - | 0.2 | - | - | - | - | - | - | - | - |
| | | Sodium carbonate | - | - | 0.2 | 0.5 | 1.0 | - | - | - | - | - |
| | | Calcium carbonate | - | - | - | - | - | 0.2 | 1.0 | - | - | - |
| | Wetting agent | Glycerin | 20.0 | 20.0 | 20.0 | 20.0 | 20.0 | 20.0 | 20.0 | 20.0 | 20.0 | 20.0 |
| | Penetrating agent | Triethylene glycol-n-butyl ether | 1.0 | 1.0 | 1.0 | 1.0 | 1.0 | 1.0 | 1.0 | 1.0 | 1.0 | 1.0 |
| | Surfactant | OLFINE(R) E1010 (*3) | 0.2 | 0.2 | 0.2 | 0.2 | 0.2 | 1.2 | 2.2 | 0.2 | 0.2 | 0.2 |
| | Water | | Remainder | Remainder | Remainder | Remainder | Remainder | Remainder | Remainder | Remainder | Remainder | Remainder |
| A/B | | | - | - | - | - | - | - | - | - | 6.0 | 6.0 |
| Initial pH (pH value before storage test) | | | 8.1 | 8.4 | 10.6 | 10.8 | 11.0 | - | - | 9.2 | 8.8 | 8.5 |
| pH after storage (pH value after storage test) | | | 7.5 | 7.7 | 10.2 | 10.3 | 10.5 | - | - | 8.9 | 8.3 | 8.4 |
| Change in pH (%) | | | C -7.8 | C -7.7 | C -4.1 | C -4.8 | C -3.9 | D - | D - | C -4.2 | C -5.6 | C -0.3 |
| Agglomeration Evaluation | | | A | A | A | A | C | C | C | A | C | C |

*1: Water dispersion of carbon black (containing resin dispersing agent); Values in the table indicate the formulation amount of the pigment solid portion.

*2: Aqueous dispersion of C.I. Pigment Yellow 74 (containing resin dispersing agent); Values in the table indicate the formulation amount of the pigment solid portion.

*3: Acetylene glycol surfactant: Nissin Chemical Co. Ltd.; Values in the table indicate the formulation amount.

[Table 3]

| | | | Example | Reference Example |
|---|---|---|---|---|
| | | | 1 | 1 |
| Water-based ink composition (mass%) | Colorant (A) | Pigment dispersion A (*1) | 6.0 | 6.0 |
| | | Pigment dispersion B (*2) | - | - |
| | pH adjusting agent | Sodium hydrogencarbonate (B) | 0.2 | - |
| | | Potassium hydrogencarbonate (B) | - | - |
| | | Triethanolamine | - | 0.2 |
| | Wetting agent | Glycerin | 20.0 | 20.0 |
| | Penetrating agent | Triethylene glycol-n-butyl ether | 1.0 | 1.0 |
| | Surfactant | OLFINE(R) E1010 (*3) | 0.2 | 0.2 |
| | Water | | Remainder | Remainder |
| A/B | | | 30.0 | - |
| Initial pH (pH value before storage test) | | | 8.3 | 9.2 |
| pH after storage (pH value after storage test) | | | 8.1 | 8.3 |
| Change in pH (%) | | | A -2.8 | C -10.2 |
| Agglomeration Evaluation | | | A | A |

*1: Water dispersion of carbon black (containing resin dispersing agent); Values in the table indicate the formulation amount of the pigment solid portion.

*2: Aqueous dispersion of C.I. Pigment Yellow 74 (containing resin dispersing agent); Values in the table indicate the formulation amount of the pigment solid portion.

*3: Acetylene glycol surfactant: Nissin Chemical Co. Ltd.; Values in the table indicate the formulation amount.

As shown in Table 1, Examples 1 to 18 had evaluation results for the change in pH of "B" or higher, and agglomeration evaluation results of "A" or higher, which is favorable. Of Examples 1 to 7, Examples 1 and 4 to 7, which satisfy condition (1-2), had better change in pH evaluation results than Examples 2 and 3, which have the same conditions except that they do not satisfy condition (1-2). Of Examples 1, 10, and 11, Example 1 had excellent evaluation results for the change in pH, as compared to Examples 10 and 11 where the formulation amount of surfactant or the type of surfactant was different.

On the other hand, Comparative Examples 1 to 8, which did not use the alkali metal hydrogencarbonate, had poor evaluation results for the change in pH. In Comparative Examples 6 and 7, the initial pH and pH after storage could not be measured because of large aggregates of pigment particles. Furthermore, in Comparative Examples 9 and 10 which did not satisfy condition (1), the evaluation results of the agglomeration evaluation were inferior.

As shown in Table 3, Reference Example 1, where only triethanolamine was used as a pH adjusting agent without using the alkali metal hydrogencarbonate, had inferior evaluation results for the change in pH.

INDUSTRIAL APPLICABILITY

As described above, the water-based ink of the present invention can both reduce the formulation amount of TEA and improve storage stability. The water-based inks of the present invention are widely applicable to inkjet recording on various recording media.

REFERENCE SIGNS LIST

1   Inkjet recording device
2   Ink cartridge
3   Ink ejecting part (inkjet head)
4   Head unit
5   Carriage
6   Drive unit
7   Platen roller
8   Purging device

**Claims**

1.  A water-based ink for inkjet recording, comprising:

    a pigment;
    an alkali metal hydrogencarbonate; and
    water,
    wherein an amount of the pigment and an amount of the alkali metal hydrogencarbonate satisfy Condition (1):

    $$\text{Condition (1): } 7.5 \leq A/B,$$

    wherein A is a solid amount of the pigment by mass in the water-based ink relative to a total mass of the water-based ink, and B is the amount of the alkali metal hydrogencarbonate by mass in the water-based ink relative to the total mass of the water-based ink.

2.  The water-based ink according to claim 1, wherein a pH of the water-based ink is less than 9.2, a pH of the water-based ink after a storage of the water-based ink at 60°C for 1 week is 7.8 or more, and a change in pH between before the storage and after the storage is 10% or less.

3.  The water-based ink according to claim 2, wherein the change in pH is less than 5%.

4.  The water-based ink according to any one of claims 1 to 3, wherein the amount of the pigment and the amount of the alkali metal hydrogencarbonate satisfy Condition (1-1):

    $$\text{Condition (1-1): } 7.5 \leq A/B \leq 120.$$

5.  The water-based ink according to any one of claims 1 to 4, wherein the amount of the pigment and the amount of the alkali metal hydrogencarbonate satisfy Condition (1-2):

    $$\text{Condition (1-2): } 7.5 \leq A/B < 60.$$

6.  The water-based ink according to any one of claims 1 to 5, wherein the alkali metal hydrogencarbonate comprises at least one selected from the group consisting of sodium hydrogencarbonate and potassium hydrogencarbonate.

7.  The water-based ink according to any one of claims 1 to 6, further comprising a surfactant, preferably an acetylene-based surfactant.

8. The water-based ink according to claim 7, wherein an amount of the surfactant, preferably acetylene-based surfactant, in the water-based ink is 0.05 mass% or more and 3.0 mass% or less.

9. The water-based ink according to any one of claims 1 to 8, further comprising at least one penetrating agent, preferably selected from the group consisting of an alkylene-based diol and a glycol ether-based compound.

10. The water-based ink according to claim 9, wherein an amount of the penetrating agent in the water-based ink is 1.0 mass% or more and 10.0 mass% or less.

11. The water-based ink according to any one of claims 1 to 10, further comprising a resin dispersing agent, wherein the pigment is dispersed in the water with the resin dispersing agent.

12. An inkjet recording method, comprising:
ejecting the water-based ink according to any one of claims 1 to 11 onto a recording medium (T) for recording by an inkjet method.

13. An inkjet recording device (1), comprising:

an ink storing part (2); and
an ink ejecting part (3) to eject the water-based ink according to any one of claims 1 to 11, stored in the ink storing part (2).

14. An ink storage container (2) comprising the water-based ink according to any one of claims 1 to 11, stored therein.

15. A printed recording medium, comprising:

a recording medium (P); and
the water-based ink according to any oner of claims 1 to 11, provided on the recording medium.

**Patentansprüche**

1. Wasserbasierte Tinte für Tintenstrahlaufzeichnung, umfassend:

ein Pigment;
ein Alkalimetallhydrogencarbonat; und
Wasser,
wobei eine Menge des Pigments und eine Menge des Alkalimetallhydrogencarbonats die Bedingung (1) erfüllen:

$$\text{Bedingung (1): } 7{,}5 \leq A/B,$$

wobei A eine Feststoffmenge des Pigments nach Masse in der wasserbasierten Tinte relativ zu einer Gesamtmasse der wasserbasierten Tinte ist, und B die Menge des Alkalimetallhydrogencarbonats nach Masse in der wasserbasierten Tinte relativ zu der Gesamtmasse der wasserbasierten Tinte ist.

2. Wasserbasierte Tinte gemäß Anspruch 1, wobei ein pH-Wert der wasserbasierten Tinte weniger als 9,2 beträgt, ein pH-Wert der wasserbasierten Tinte nach einer Lagerung der wasserbasierten Tinte bei 60 °C für 1 Woche 7,8 oder mehr beträgt, und eine Änderung des pH-Werts zwischen vor der Lagerung und nach der Lagerung 10 % oder weniger beträgt.

3. Wasserbasierte Tinte gemäß Anspruch 2, wobei die Änderung des pH-Werts weniger als 5 % beträgt.

4. Wasserbasierte Tinte gemäß einem der Ansprüche 1 bis 3, wobei die Menge des Pigments und die Menge des Alkalimetallhydrogencarbonats die Bedingung (1-1) erfüllen:

$$\text{Bedingung (1-1): } 7{,}5 \leq A/B \leq 120.$$

**5.** Wasserbasierte Tinte gemäß einem der Ansprüche 1 bis 4, wobei die Menge des Pigments und die Menge des Alkalimetallhydrogencarbonats die Bedingung (1-2) erfüllen:

$$\text{Bedingung (1-2)}: 7{,}5 \leq A/B < 60.$$

**6.** Wasserbasierte Tinte gemäß einem der Ansprüche 1 bis 5, wobei das Alkalimetallhydrogencarbonat mindestens eines, ausgewählt aus der Gruppe, bestehend aus Natriumhydrogencarbonat und Kaliumhydrogencarbonat, umfasst.

**7.** Wasserbasierte Tinte gemäß einem der Ansprüche 1 bis 6, ferner umfassend ein Tensid, vorzugsweise ein acetylenbasiertes Tensid.

**8.** Wasserbasierte Tinte gemäß Anspruch 7, wobei eine Menge des Tensids, vorzugsweise des acetylenbasierten Tensids, in der wasserbasierten Tinte 0,05 Massen-% oder mehr und 3,0 Massen-% oder weniger beträgt.

**9.** Wasserbasierte Tinte gemäß einem der Ansprüche 1 bis 8, ferner umfassend mindestens ein Penetriermittel, vorzugsweise ausgewählt aus der Gruppe, bestehend aus einem alkylenbasierten Diol und einer glycoletherbasierten Verbindung.

**10.** Wasserbasierte Tinte gemäß Anspruch 9, wobei eine Menge des Penetriermittels in der wasserbasierten Tinte 1,0 Massen-% oder mehr und 10,0 Massen-% oder weniger beträgt.

**11.** Wasserbasierte Tinte gemäß einem der Ansprüche 1 bis 10, ferner umfassend ein Harzdispergiermittel, wobei das Pigment in dem Wasser mit dem Harzdispergiermittel dispergiert ist.

**12.** Tintenstrahlaufzeichnungsverfahren, umfassend:
Ausstoßen der wasserbasierten Tinte gemäß einem der Ansprüche 1 bis 11 auf ein Aufzeichnungsmedium (T) zum Aufzeichnen durch ein Tintenstrahlverfahren.

**13.** Tintenstrahlaufzeichnungsvorrichtung (1), umfassend:

einen Tintenvorratsteil (2); und
einen Tintenausstoßteil (3) zum Ausstoßen der wasserbasierten Tinte gemäß einem der Ansprüche 1 bis 11, die in dem Tintenvorratsteil (2) aufbewahrt wird.

**14.** Tintenvorratsbehälter (2), umfassend die wasserbasierte Tinte gemäß einem der Ansprüche 1 bis 11, die darin aufbewahrt wird.

**15.** Bedrucktes Aufzeichnungsmedium, umfassend:

ein Aufzeichnungsmedium (P); und
die wasserbasierte Tinte gemäß einem der Ansprüche 1 bis 11, die auf dem Aufzeichnungsmedium bereitgestellt ist.

**Revendications**

**1.** Encre à base d'eau pour enregistrement par jet d'encre, comprenant :

un pigment ;
un hydrogénocarbonate de métal alcalin ; et
de l'eau,
où une quantité du pigment et une quantité de l'hydrogénocarbonate de métal alcalin satisfont à la Condition (1) :

$$\text{Condition (1)}: 7{,}5 \leq A/B,$$

où A est une quantité solide du pigment en masse dans l'encre à base d'eau par rapport à une masse totale de l'encre à base d'eau, et B est la quantité de l'hydrogénocarbonate de métal alcalin en masse dans l'encre à base d'eau par rapport à la masse totale de l'encre à base d'eau.

2. Encre à base d'eau selon la revendication 1, où un pH de l'encre à base d'eau est inférieur à 9,2, un pH de l'encre à base d'eau après un stockage de l'encre à base d'eau à 60 °C pendant 1 semaine est de 7,8 ou plus, et un changement de pH entre avant le stockage et après le stockage est de 10 % ou moins.

3. Encre à base d'eau selon la revendication 2, où le changement de pH est inférieur à 5 %.

4. Encre à base d'eau selon l'une quelconque des revendications 1 à 3, où la quantité du pigment et la quantité de l'hydrogénocarbonate de métal alcalin satisfont à la Condition (1-1) :

$$\text{Condition (1-1) : } 7,5 \leq A/B \leq 120.$$

5. Encre à base d'eau selon l'une quelconque des revendications 1 à 4, où la quantité du pigment et la quantité de l'hydrogénocarbonate de métal alcalin satisfont à la Condition (1-2) :

$$\text{Condition (1-2) : } 7,5 \leq A/B < 60.$$

6. Encre à base d'eau selon l'une quelconque des revendications 1 à 5, où l'hydrogénocarbonate de métal alcalin comprend au moins un choisi dans le groupe consistant en l'hydrogénocarbonate de sodium et l'hydrogénocarbonate de potassium.

7. Encre à base d'eau selon l'une quelconque des revendications 1 à 6, comprenant en outre un tensioactif, de préférence un tensioactif à base d'acétylène.

8. Encre à base d'eau selon la revendication 7, où une quantité du tensioactif, de préférence du tensioactif à base d'acétylène, dans l'encre à base d'eau est de 0,05 % en masse ou plus et de 3,0 % en masse ou moins.

9. Encre à base d'eau selon l'une quelconque des revendications 1 à 8, comprenant en outre au moins un agent pénétrant, de préférence choisi dans le groupe consistant en un diol à base d'alkylène et un composé à base d'éther de glycol.

10. Encre à base d'eau selon la revendication 9, où une quantité de l'agent pénétrant dans l'encre à base d'eau est de 1,0 % en masse ou plus et de 10,0 % en masse ou moins.

11. Encre à base d'eau selon l'une quelconque des revendications 1 à 10, comprenant en outre un agent de dispersion de résine, où le pigment est dispersé dans l'eau avec l'agent de dispersion de résine.

12. Procédé d'enregistrement par jet d'encre, comprenant :
l'éjection de l'encre à base d'eau selon l'une quelconque des revendications 1 à 11 sur un support d'enregistrement (T) pour enregistrement par un procédé à jet d'encre.

13. Dispositif d'enregistrement par jet d'encre (1), comprenant :

une partie de stockage d'encre (2) ; et
une partie d'éjection d'encre (3) pour éjecter l'encre à base d'eau selon l'une quelconque des revendications 1 à 11, stockée dans la partie de stockage d'encre (2).

14. Récipient de stockage d'encre (2) comprenant l'encre à base d'eau selon l'une quelconque des revendications 1 à 11, stockée dans celui-ci.

15. Support d'enregistrement imprimé, comprenant :

un support d'enregistrement (P) ; et
l'encre à base d'eau selon l'une quelconque des revendications 1 à 11, fournie sur le support d'enregistrement.

FIG.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003128965 B
- JP 2003128965 A
- KR 20190054855 A
- JP H83498 A
- JP 2000513396 W
- JP 2008524400 W
- JP 2009515007 W
- JP 2011515535 W
- JP 2008246821 A